# EUROPEAN PATENT APPLICATION

(11) **EP 4 625 122 A1**
(43) Date of publication of application: **01.10.2025**
(21) Application number: 23902544.8
(22) Date of filing: 05.12.2023
(51) Int. Cl.: G06F 3/041

(54) **TOUCH SCANNING METHOD, TOUCH CHIP, DISPLAY MODULE AND ELECTRONIC DEVICE**

(30) Priority: 14.12.2022 CN 202211608253
(71) Applicant: Huawei Technologies Co., Ltd., Shenzhen, Guangdong 518129 (CN)
(72) Inventor: NIU, Zeyu, Shenzhen, Guangdong 518129 (CN); LIU, Weiping, Shenzhen, Guangdong 518129 (CN); YANG, Mei, Shenzhen, Guangdong 518129 (CN)
(74) Representative: Goddar, Heinz J.
(86) International application number: PCT/CN2023/136468
(87) International publication number: WO 2024/125347

(57) **Abstract**

Embodiments of this application provide a touch scanning method, a touch chip, a display module, and an electronic device, and relate to the field of display technologies, to reduce interference between a TPIC signal and a DDIC signal. The touch scanning method is applied to a touch chip TPIC of a display, and the display is configured to receive a display drive signal based on a first frame rate. The touch scanning method includes: outputting a touch scanning signal to the display based on a second frame rate; receiving touch data fed back by the display; and outputting a touch scanning result based on the touch data, where the first frame rate is an adjustable frame rate, and the second frame rate is an integer multiple of the first frame rate. In at least one frame, a moment at which the touch scanning signal is output is delayed by specified time compared with a moment at which a frame synchronization signal is received.

## Description

This application claims priority to Chinese Patent Application No. 202211608253.8, filed with the China National Intellectual Property Administration on December 14, 2022 and entitled "TOUCH SCANNING METHOD, TOUCH CHIP, DISPLAY MODULE, AND ELECTRONIC DEVICE", which is incorporated herein by reference in its entirety.

### TECHNICAL FIELD

This application relates to the field of display technologies, and in particular, to a touch scanning method, a touch chip, a display module, and an electronic device.

### BACKGROUND

A display driver chip (display driver integrated circuit, DDIC) and a touch chip (touch panel integrated circuit, TPIC) are usually disposed in an electronic device having touch and display functions. The DDIC is configured to drive a display to display an image, and the TPIC is configured to collect a touch operation signal on the display.

However, when the TPIC collects the touch operation signal on the display, interference is caused to a display drive signal output by the DDIC. As a result, a displayed picture is affected. Therefore, reducing interference between a TPIC signal and a DDIC signal becomes a technical problem that needs to be resolved currently.

### SUMMARY

Embodiments of this application provide a touch scanning method, a touch chip, a display module, and an electronic device, to reduce interference between a TPIC signal and a DDIC signal.

To achieve the foregoing objective, the following technical solutions are used in this application.

According to a first aspect of embodiments of this application, a touch scanning method is provided. The touch scanning method is applied to a touch chip TPIC of a display, and the display is configured to receive a display drive signal based on a first frame rate. The touch scanning method includes: outputting a touch scanning signal to the display based on a second frame rate; receiving touch data fed back by the display; and outputting a touch scanning result based on the touch data, where the first frame rate is an adjustable frame rate, and the second frame rate is an integer multiple of the first frame rate.

According to the touch scanning method provided in this embodiment of this application, in an entire touch scanning process, the second frame rate matches the first frame rate displayed on the display. The second frame rate is adjusted, so that the second frame rate is an integer multiple of the first frame rate, and the second frame rate and the first frame rate have a synchronization (sync) relationship, thereby reducing impact of the touch scanning signal on the display drive signal. On this basis, based on the dynamically adjustable first frame rate, the second frame rate of the touch scanning signal is also dynamically adjustable, to meet application requirements of different frequencies.

In a possible implementation, outputting the touch scanning signal to the display based on the second frame rate includes: receiving a frame synchronization signal corresponding to the first frame rate, and outputting the touch scanning signal to the display by using the frame synchronization signal as a reference and based on the second frame rate. The frame synchronization signal synchronized with the first frame rate is transmitted to the TPIC based on the first frame rate, so that the second frame rate and the first frame rate can have a synchronization relationship. A principle is simple and easy to implement.

In a possible implementation, the first frame rate periodically changes. In this way, drive complexity can be reduced.

In a possible implementation, in at least one frame, a moment at which the touch scanning signal is output is delayed by specified time compared with a moment at which the frame synchronization signal is received. In this way, it is equivalent to decoupling sending time of the touch scanning signal from a display effective range. After the frame synchronization signal is received, adjustment may be performed inside the TPIC, so that the output touch scanning signal has a specific delay (delay), to reduce an overlapping degree of the touch scanning signal output by the TPIC to the display drive signal output by a DDIC, thereby reducing interference of the touch scanning signal output by the TPIC to the display drive signal output by the DDIC, and mitigating a display ghosting problem.

In a possible implementation, the touch scanning signal is periodically output, each period includes a plurality of consecutive frames, and specified time corresponding to the plurality of frames is not completely the same or completely different. Because a specific frame in which a most serious ghosting problem occurs is not determined, time-domain smoothing effect is generated by accumulating a plurality of frames in a period, to achieve time-domain ghosting attenuation effect.

In a possible implementation, the touch scanning method further includes: receiving a delayed reset signal between adjacent periodicities. Accumulated delay time in the period is reset, so that display effect can be avoided from being affected by continuous accumulation of the delay time.

In a possible implementation, each period includes two frames. In this way, it is known that the ghosting problem occurs in time domain, and the touch scanning signal output by the TPIC generates severe ghosting a in an overlapping area for the display drive signal output by the DDIC. The ghosting a of the displayed image is attenuated in time domain by adjusting synchronization time in time domain, for example, attenuated from a to a/2, so that the display ghosting problem is mitigated.

In a possible implementation, the touch scanning method is applied to a TPIC in an organic light-emitting diode display. This is a common application scenario.

According to a second aspect of embodiments of this application, a touch chip TPIC is provided. The TPIC is used in a display, and the display is configured to receive a display drive signal based on a first frame rate. The TPIC is configured to: output a touch scanning signal to the display based on a second frame rate; receive touch data fed back by the display; and output a touch scanning result based on the touch data, where the first frame rate is an adjustable frame rate, and the second frame rate is an integer multiple of the first frame rate.

Beneficial effect of the TPIC provided in the second aspect of this application is the same as beneficial effect of the touch scanning method provided in the first aspect. Details are not described herein again.

In a possible implementation, outputting the touch scanning signal to the display based on the second frame rate includes: receiving a frame synchronization signal corresponding to the first frame rate, and outputting the touch scanning signal to the display by using the frame synchronization signal as a reference and based on the second frame rate.

In a possible implementation, in at least one frame, a moment at which the touch scanning signal is output is delayed by specified time compared with a moment at which the frame synchronization signal is received.

In a possible implementation, the touch scanning signal is periodically output, each period includes a plurality of consecutive frames, and specified time corresponding to the plurality of frames is not completely the same or completely different.

In a possible implementation, the TPIC is further configured to receive a delayed reset signal between adjacent periodicities.

In a possible implementation, the period includes two frames.

In a possible implementation, the TPIC is used in an organic light-emitting diode display.

According to a third aspect of embodiments of this application, a touch scanning method is provided. The touch scanning method is applied to a touch chip TPIC of a display, and the display is configured to receive a display drive signal based on a first frame rate. The touch scanning method includes: outputting a touch scanning signal to the display based on a second frame rate, where the second frame rate is an integer multiple of the first frame rate; receiving touch data fed back by the display; and outputting a touch scanning result based on the touch data, where in at least one frame, a moment at which the touch scanning signal is output is delayed by specified time compared with a moment at which the display receives the display drive signal.

According to the touch scanning method provided in this embodiment of this application, in an entire touch scanning process, the second frame rate matches the first frame rate displayed on the display. The second frame rate is adjusted, so that the second frame rate is an integer multiple of the first frame rate, and the second frame rate and the first frame rate have a synchronization (sync) relationship, thereby reducing impact of the touch scanning signal on the display drive signal. On this basis, after a frame synchronization signal is received, adjustment may be performed inside the TPIC, so that the output touch scanning signal has a specific delay (delay), which is equivalent to decoupling sending time of the touch scanning signal from a display effective range. In this way, an overlapping degree of the touch scanning signal output by the TPIC to the display drive signal output by the DDIC is reduced, thereby reducing interference of the touch scanning signal output by the TPIC to the display drive signal output by the DDIC, and mitigating a display ghosting problem.

In a possible implementation, outputting the touch scanning signal to the display based on the second frame rate includes: receiving a frame synchronization signal corresponding to the first frame rate, and outputting the touch scanning signal to the display by using the frame synchronization signal as a reference and based on the second frame rate. The frame synchronization signal synchronized with the first frame rate is transmitted to the TPIC based on the first frame rate, so that the second frame rate and the first frame rate can have a synchronization relationship. A principle is simple and easy to implement.

In a possible implementation, the touch scanning signal is periodically output, each period includes a plurality of consecutive frames, and specified time corresponding to the plurality of frames is not completely the same or completely different. Because a specific frame in which a most serious ghosting problem occurs is not determined, time-domain smoothing effect is generated by accumulating a plurality of frames in a period, to achieve time-domain ghosting attenuation effect.

In a possible implementation, the touch scanning method further includes: receiving a delayed reset signal between adjacent periodicities. Accumulated delay time in the period is reset, so that display effect can be avoided from being affected by continuous accumulation of the delay time.

According to a fourth aspect of embodiments of this application, a touch chip TPIC is provided. The TPIC is used in a display, and the display is configured to receive a display drive signal based on a first frame rate. The TPIC is configured to: output a touch scanning signal to the display based on a second frame rate, where the second frame rate is an integer multiple of the first frame rate; receive touch data fed back by the display; and output a touch scanning result based on the touch data, where in at least one frame, a moment at which the touch scanning signal is output is delayed by specified time compared with a moment at which the display receives the display drive signal.

Beneficial effect of the TPIC provided in the fourth aspect of this application is the same as beneficial effect of the touch scanning method provided in the third aspect. Details are not described herein again.

In a possible implementation, outputting the touch scanning signal to the display based on the second frame rate includes: receiving a frame synchronization signal corresponding to the first frame rate, and outputting the touch scanning signal to the display by using the frame synchronization signal as a reference and based on the second frame rate.

In a possible implementation, the touch scanning signal is periodically output, each period includes a plurality of consecutive frames, and specified time corresponding to the plurality of frames is not completely the same or completely different.

In a possible implementation, the TPIC is further configured to receive a delayed reset signal between adjacent periodicities.

According to a fifth aspect of embodiments of this application, a display module is provided. The display module includes a display, a touch chip TPIC, and a display driver chip DDIC. The TPIC is coupled to the DDIC. The TPIC is configured to implement the touch scanning method according to any implementation of the first aspect, or the TPIC is configured to implement the touch scanning method according to any implementation of the third aspect.

In a possible implementation, the DDIC is configured to output a frame synchronization signal to the TPIC based on a first frame rate of the display.

In a possible implementation, the DDIC is configured to output a display drive signal to the display based on the first frame rate.

In a possible implementation, the DDIC is further configured to output the display drive signal to the display based on the first frame rate and a line rate corresponding to the first frame rate.

According to a sixth aspect of embodiments of this application, an electronic device is provided. The electronic device includes a processor and a display module. The processor is coupled to the display module, and the display module includes the display module according to any implementation of the fifth aspect.

According to a seventh aspect of embodiments of this application, a computer-readable storage medium is provided. The computer-readable storage medium includes computer instructions. When the computer instructions are run on a device, the device is enabled to perform the touch scanning method according to any implementation of the first aspect, or perform the touch scanning method according to any implementation of the third aspect.

According to an eighth aspect of embodiments of this application, a computer program product is provided. When the computer program product is run on a computer, the computer is enabled to perform the touch scanning method according to any implementation of the first aspect, or perform the touch scanning method according to any implementation of the third aspect.

### BRIEF DESCRIPTION OF DRAWINGS

FIG. 1A is a block diagram of a structure of an electronic device according to an embodiment of this application;
FIG. 1B is a layout diagram of a display module according to an embodiment of this application;
FIG. 1C is a cross-sectional view of a display according to an embodiment of this application;
FIG. 1D is a diagram of a structure of a pixel circuit according to an embodiment of this application;
FIG. 2 is a timing diagram of a display module according to an embodiment of this application;
FIG. 3 is a diagram of a waveform of a first frame rate according to an embodiment of this application;
FIG. 4 is a diagram of steps of a touch scanning method according to an embodiment of this application; and
FIG. 5 is a relative timing diagram of a touch scanning signal and a frame synchronization signal according to an embodiment of this application.

### DESCRIPTION OF EMBODIMENTS

The following describes technical solutions in embodiments of this application with reference to accompanying drawings in embodiments of this application. It is clear that the described embodiments are merely some rather than all of embodiments of this application.

The terms such as "first" and "second" below are only for ease of description, and cannot be understood as indicating or implying relative importance or implicitly indicating a quantity of indicated technical features. Therefore, a feature limited by "second", "first", or the like may explicitly or implicitly include one or more features. In the descriptions of this application, unless otherwise stated, "a plurality of" means two or more than two.

In addition, in embodiments of this application, orientation terms such as "upper", "lower", "left", and "right" may include but are not limited to definitions based on illustrated orientations in which components in the accompanying drawings are placed. It should be understood that, these directional terms may be relative concepts. They are used for description and clarification of relative positions, and may vary accordingly depending on a change in the orientations in which the components in the accompanying drawings are placed in the accompanying drawings.

In embodiments of this application, unless otherwise clearly specified and limited, a term "connection" should be understood in a broad sense. For example, the "connection" may be a fixed connection, a detachable connection, or an integrated connection, or may be a direct connection or an indirect connection implemented through an intermediate medium. In addition, the term "coupling" may be a direct electrical connection, or may be an indirect electrical connection through an intermediate medium. The term "contact" may be direct contact or indirect contact through an intermediate medium.

In embodiments of this application, "and/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between the associated objects.

Embodiments of this application provide an electronic device. The electronic device is, for example, a consumer electronic product, a home electronic product, a vehicle-mounted electronic product, a financial terminal product, or a communication electronic product. The consumer electronic product is, for example, a mobile phone (mobile phone), a tablet computer (pad), a notebook computer, an e-reader, a personal computer (personal computer, PC), a personal digital assistant (personal digital assistant, PDA), a desktop display, an intelligent wearable product (for example, a smartwatch or a smart band), a virtual reality (virtual reality, VR) terminal device, an augmented reality (augmented reality, AR) terminal device, or an uncrewed aerial vehicle. The home electronic product is, for example, a smart door lock, a television, a remote control, a refrigerator, or a small charging home appliance (for example, a soy milk maker or a robot vacuum). The vehicle-mounted electronic product is, for example, a vehicle-mounted navigator or a vehicle-mounted high-density digital video disc (digital video disc, DVD). The financial terminal product is, for example, an automated teller machine (automated teller machine, ATM) or a terminal for self-help service handling. For example, the communication electronic product is a communication device such as a server, a memory, a radar, or a base station.

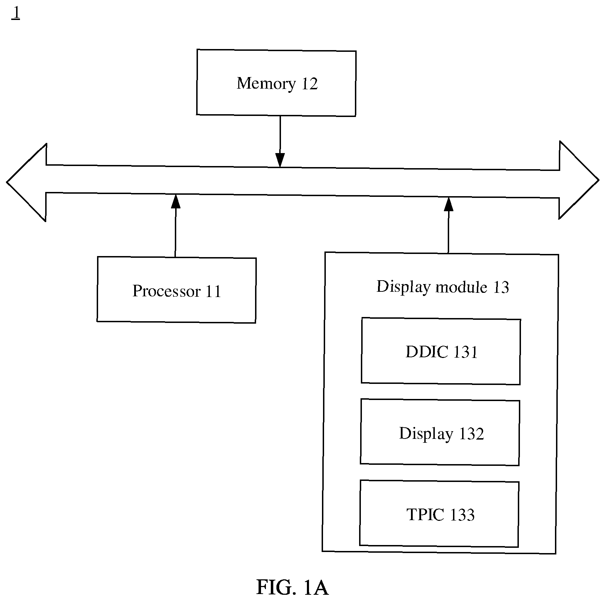

For ease of description, the following uses an example in which the electronic device is a mobile phone for description. FIG. 1A is a block diagram of a structure of an electronic device according to an embodiment of this application. As shown in FIG. 1A, the electronic device 1 may include one or more of the following components: a processor 11, a memory 12, and a display module 13.

The processor 11 may include one or more processing cores. The processor 11 is connected to all parts of the entire electronic device 1 through various interfaces and lines, and performs various functions of the electronic device 1 and processes data by running or executing instructions, a program, a code set, or an instruction set stored in the memory 12 and invoking data stored in the memory 12. For example, the processor 11 may be implemented in at least one hardware form of a digital signal processor (digital signal processor, DSP), a field-programmable gate array (field-programmable gate array, FPGA), or a programmable logic array (programmable logic array, PLA). The processor 11 may integrate one or a combination of a central processing unit (central processing unit, CPU), a graphics processing unit (graphics processing unit, GPU), a neural-network processing unit (neural-network processing unit, NPU), an application processor (application processor, AP), a modem (modem), and the like. The CPU mainly processes an operating system, a user interface, an application program, and the like. The GPU is configured to be responsible for rendering and drawing content that needs to be displayed by the display module 13. The NPU is configured to implement an artificial intelligence (artificial intelligence, Al) function. The modem is configured to process wireless communication. It may be understood that, alternatively, the foregoing modem may not be integrated into the processor 11, and is implemented through a chip alone.

The memory 12 may include a random access memory (random access memory, RAM), or may include a read-only memory (read-only memory, ROM). For example, the memory 12 includes a non-transitory computer-readable storage medium (non-transitory computer-readable storage medium), and the memory 12 may be configured to store instructions, a program, code, a code set, or an instruction set. The memory 12 may include a program storage area and a data storage area. The program storage area may store instructions used to implement an operating system, instructions used to implement at least one function (for example, a touch function, a sound playing function, and an image playing function), instructions used to implement each method embodiment of this application, and the like. The data storage area may store data (for example, audio data and a phone book) created based on use of the electronic device 1.

The display module 13 is a display component configured to display an image, and is usually disposed on a light-emitting side of the electronic device 1. The display module 13 may be designed as a bezel-less screen, a curved screen, an irregular-shaped screen, a double-sided screen, or a foldable screen. The display module 13 may alternatively be designed as a combination of a bezel-less screen and a curved screen, or a combination of an irregular-shaped screen and a curved screen. This is not limited in embodiments.

In some embodiments, still refer to FIG. 1A. The display module 13 includes a display driver chip (display driver integrated circuit, DDIC) 131, a display 132, and a touch chip (touch panel integrated circuit, TPIC) 133.

The DDIC 131 is configured to drive the display 132 to display an image. In addition, the DDIC 131 is connected to the processor 11 through a mobile industry processor interface (mobile industry processor interface, MIPI) interface, and is configured to receive image data and instructions that are delivered by the processor 11.

The TPIC 133 is configured to drive the display 132 to receive a touch operation. The touch operation is triggered by a user using any suitable object such as a finger or a stylus. In embodiments of this application, the TPIC 133 is further electrically connected to the DDIC 131, and is configured to receive a synchronization signal (for example, a frame synchronization signal or a line synchronization signal) sent by the DDIC 131. In addition, the TPIC 133 is further connected to the processor 11 through an MIPI interface, and is configured to report a touch signal to the processor 11.

For example, the display 132 may be a low temperature poly-silicon (low temperature poly-silicon, LTPS) display, an active-matrix organic light-emitting diode (active-matrix organic light-emitting diode, AMOLED) display, a low temperature polycrystalline oxide (low temperature polycrystalline oxide, LTPO) display, a liquid crystal display (liquid crystal display, LCD), or a micro organic light-emitting diode (micro organic light-emitting diode, micro OLED) display. Certainly, a type of the display 132 is not limited in embodiments of this application. All displays having a touch display function are applicable to embodiments of this application. The foregoing listed examples are merely examples.

In addition, a person skilled in the art may understand that a structure of the electronic device 1 shown in the foregoing accompanying drawings does not constitute a limitation on the electronic device 1. The electronic device 1 may include more or fewer components than those shown in the figure, or combine some components, or have different component arrangements. For example, the electronic device 1 further includes components, for example, a microphone, a speaker, a radio frequency circuit, an input unit, a sensor, an audio circuit, a wireless fidelity (wireless fidelity, Wi-Fi) module, a power supply, and a Bluetooth module. Details are not described herein again.

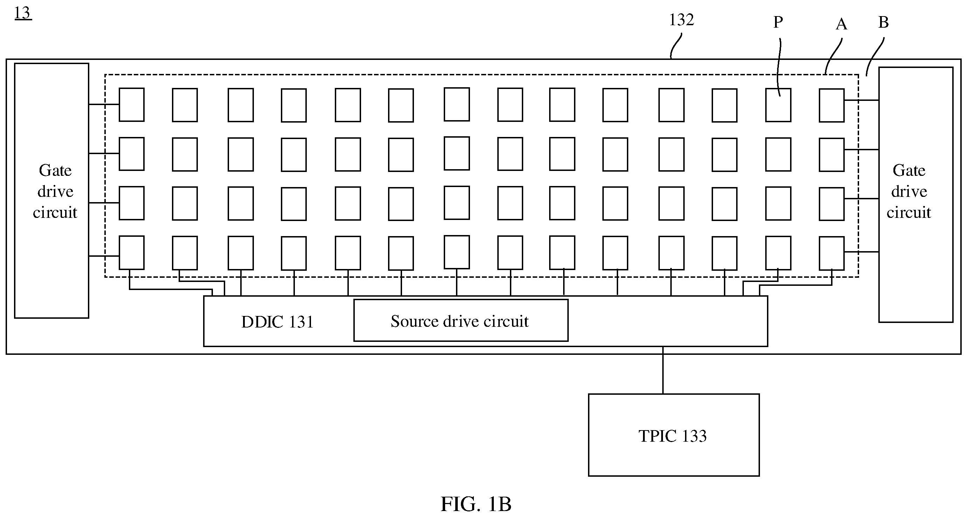

FIG. 1B is a layout diagram of the display module 13 according to an embodiment of this application. For a structure of the display module 13, in some embodiments, as shown in FIG. 1B, the display module 13 includes a DDIC 131, a display 132, and a TPIC 133.

The display 132 includes an active area (active area, AA) A and a peripheral area B located on a periphery of the active area A. In some embodiments, the active area A of the display 132 is used as a display area of the electronic device 1, and the peripheral area B of the display 132 is used as a non-display area of the electronic device 1.

As shown in FIG. 1B, the active area A of the display 132 includes a plurality of sub-pixels (sub-pixels) P. For ease of description, in this application, an example in which the plurality of sub-pixels P are arranged in a form of a matrix is used for description. In this case, sub-pixels P arranged in a line along a horizontal direction are referred to as sub-pixels in a same row, and sub-pixels P arranged in a line along a vertical direction are referred to as sub-pixels in a same column.

The electronic device 1 includes a gate drive circuit and a source drive circuit that are located in the peripheral area B of the display 132. The gate drive circuit is configured to provide a gate drive signal for the sub-pixels P. The source drive circuit is configured to provide a source drive signal for the sub-pixels P.

There may be one or more gate drive circuits. For example, as shown in FIG. 1B, the electronic device 1 includes two gate drive circuits, and the two gate drive circuits are disposed on two sides of the active area A along the horizontal direction.

For example, the source drive circuit may be integrated into the DDIC 131. For example, the DDIC 131 is directly attached to the display 132 in a form of a die (die).

The TPIC 133 is configured to provide a touch signal for the electronic device 1. The DDIC 131 responsible for displaying and the TPIC 133 responsible for touch are two independent chips, and the DDIC 131 and the TPIC 133 are coupled through a signal line.

To respond to a market requirement, a next-generation display 132 not only needs high contrast and a wide color gamut, but also imposes higher requirements for a response speed, lightness, thinness, and foldability.

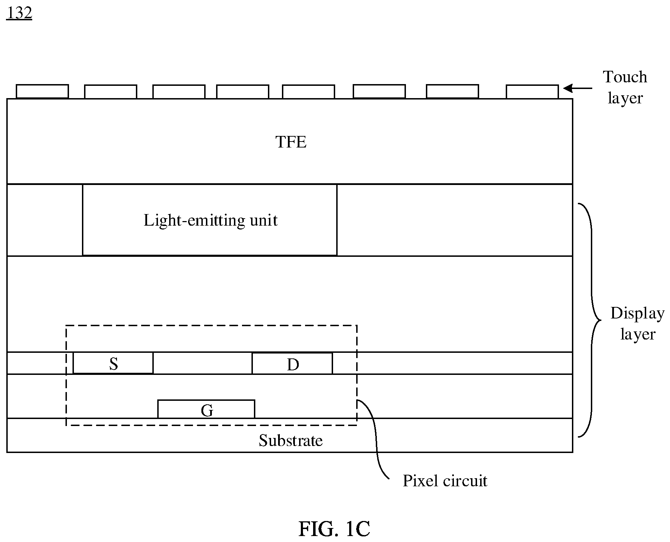

FIG. 1C is a cross-sectional view of the display 132 according to an embodiment of this application. As shown in FIG. 1C, an example of a structure of the display 132 is provided. The display includes a display layer, a touch layer, and a thin film encapsulation (thin film encapsulation, TFE) layer located between the display layer and the touch layer.

The display layer includes a substrate, a pixel circuit disposed on the substrate, and a light-emitting unit. The pixel circuit is disposed corresponding to the sub-pixels P, and the pixel circuit is coupled to the light-emitting unit.

The touch layer includes, for example, a plurality of touch sensors (touch panel sensors) arranged in an array. The touch sensor includes a transmitter electrode (transmitter electrode, TX) configured to receive a touch scanning signal, and a receiver electrode (receiver electrode, RX) configured to receive a sampling scanning signal. The transmitter electrode receives the touch scanning signal, and performs touch scanning. The receiver electrode transmits collected touch data to the TPIC 133.

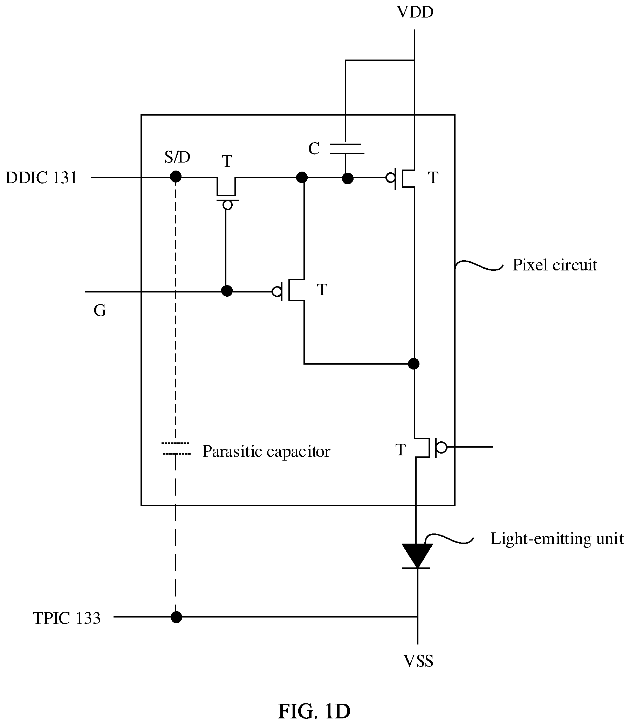

FIG. 1D is a diagram of a structure of the pixel circuit according to an embodiment of this application. FIG. 1D illustrates the structure of the pixel circuit. The pixel circuit includes four transistors T and one capacitor C, and the transistors T and the capacitor C are coupled in a manner shown in FIG. 1D. The structure of the pixel circuit shown in FIG.1D may be referred to as a 4T1C structure. Certainly, the pixel circuit may also be a 7T1C structure commonly used in this field. Regardless of which structure, the pixel circuit includes a plurality of serial-parallel coupled transistors. FIG. 1C illustrates only one transistor in one pixel circuit, and the transistor includes a gate G, a source S, and a drain D.

The display 132 includes the touch layer and the display layer that are disposed in a stacked manner, and interference is generated between a signal at the touch layer and a signal in the pixel circuit at the display layer. For example, as shown in FIG. 1D, the DDIC 131 transmits a display drive signal to the source S (or the drain D) of the transistor T in the pixel circuit, the TPIC 133 outputs a touch signal to the touch layer, and a specific capacitance coupling is generated between the touch layer and the transistor in the pixel circuit. In this case, a voltage of the display drive signal received by the transistor is offset, and the voltage of the display drive signal directly affects a pixel value displayed in each picture, so that the displayed picture is affected (for example, "ghosting" is displayed).

For example, in the display 132, in comparison with packaging the display layer by using glass, packaging the display layer by using the TFE causes a distance between the touch layer and the light-emitting unit to be reduced from about 200 µm to about 8 µm and a distance between the touch layer and a layer at which the source S and the drain D are located to be reduced to 20 µm to 30 µm.

When the touch signal output by the TPIC 133 increases from 0 V to 5.5 V, the voltage of the display drive signal received by the source S (or the drain D) also increases. When the touch signal output by the TPIC 133 decreases from 5.5 V to 0 V, the voltage of the display drive signal received by the source S (or the drain D) also decreases.

However, with a trend of lightness and thinness of a high-end mobile phone, pixel circuits at the touch layer and the display layer in the display 132 are closer to each other, and consequently an interference problem is more serious.

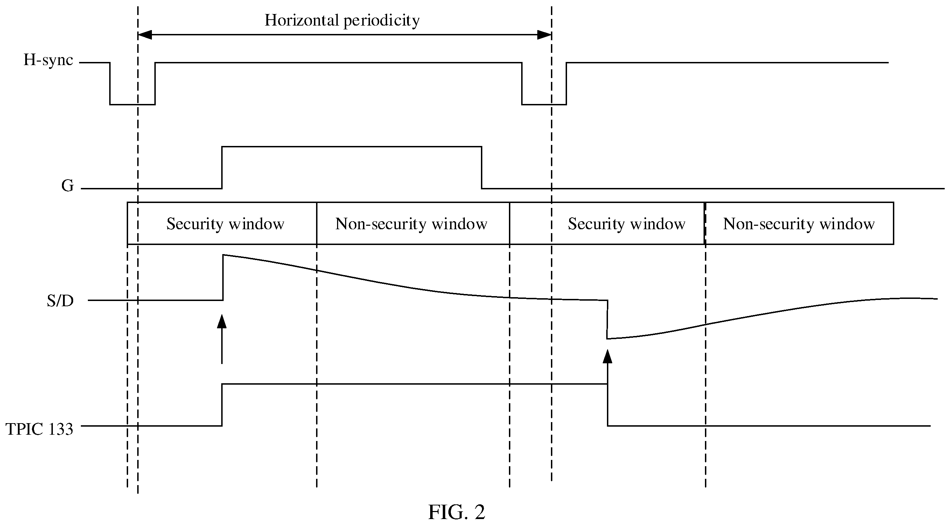

FIG. 2 is a timing diagram of a display module 13 according to an embodiment of this application. To mitigate touch and display interference problems, in some embodiments, as shown in FIG. 2, a line synchronization (horizontal synchronization, H-sync) signal of a display frame rate is transmitted to a TPIC 133 through a DDIC 131, and a security window and a non-security window are configured. The TPIC 133 is enabled to output a touch scanning signal in the security window, to reduce impact of the touch scanning signal output by the TPIC 133 on a display drive signal output by the DDIC 131.

After the TPIC 133 receives the line synchronization signal, the TPIC 133 is line-synchronized with a display 132, and a line rate of the display=a frame rate of the display*a quantity of lines. A carrier frequency of the TPIC 133 can only be selected to be an integer multiple of the line rate of the display 132. In a full high definition (full high definition, FHD) scenario, when a display frame rate of the display 132 is 60 Hz, a carrier frequency of the touch scanning signal output by the TPIC 133 is an integer multiple of 60*1080=64.8 MHz. For example, the carrier frequency of the touch scanning signal output by the TPIC 133 is 64.8 MHz, 129.6 MHz, ..., or the like.

Original data (red, green, and blue data) is transmitted to the DDIC 131 through an MIPI interface according to an encoder image display stream compression standard (display stream compression standard, DSC) of the video electronics standards association (video electronics standards association, VESA). Currently, an AMOLED display uses a screen arranged by using a sub-pixel rendering (sub-pixel rendering, SPR) technology. Therefore, the DDIC 131 uses an SPR algorithm to convert original SPR data to data that adapts to an actual screen arrangement.

The carrier frequency of the touch scanning signal output by the TPIC 133 is line-synchronized with the display frame rate, so that clearly, impact of the touch scanning signal on the display drive signal can be reduced to some extent. However, the carrier frequency can only be an integer multiple of the display frame rate. If there is noise at a corresponding frequency, space for selection is quite limited.

In view of this, embodiments of this application further provides a touch scanning method, to reduce impact of the touch scanning signal output by the TPIC 133 on the display drive signal output by the DDIC 131 by adjusting timing of the TPIC 133.

The following describes, by using several examples, the touch scanning method and the structure of the TPIC 133 that are provided in embodiments of this application.

### Example 1

The touch scanning method provided in this embodiment of this application may be, for example, applied to the TPIC 133 of the display 132 shown in FIG. 1B. The TPIC 133 is coupled to the display 132, and is configured to output a touch scanning signal and a sampling scanning signal to the display 132.

The display 132 is configured to receive a display drive signal based on a first frame rate, and the display drive signal is, for example, output by the DDIC 131 of the display 132 to the display 132 based on the first frame rate.

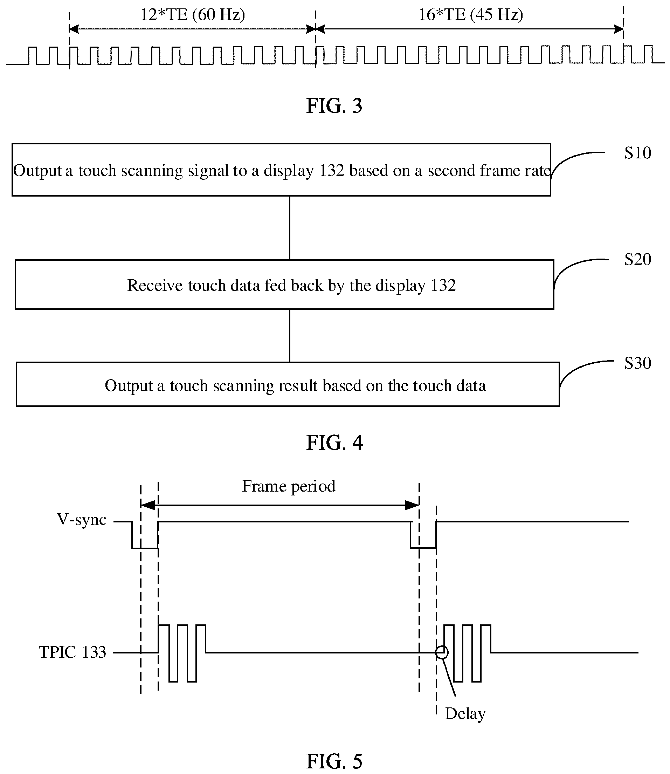

The first frame rate is a display frame rate, or is understood as a frame frequency of the display 132. FIG. 3 is a diagram of a waveform of a first frame rate according to an embodiment of this application. In this embodiment of this application, as shown in FIG. 3, the first frame rate is an adjustable frame rate, and in a display process of the display 132, the first frame rate is dynamically adjusted.

An LTPO display is used as an example. When the first frame rate of the display 132 is switched from 60 Hz to 45 Hz, a tearing effect (tearing effect, TE) signal changes in this case. The TE signal is a signal sent by an application processor AP, and is similar to a frame synchronization (vertical synchronization, V-sync) signal inside the DDIC 131.

For a change of the first frame rate, for example, the first frame rate may be switched between values such as 120 Hz, 90 Hz, 60 Hz, and 45 Hz. Certainly, an adjustment rule of the first frame rate is not limited in this embodiment of this application.

In some embodiments, the first frame rate periodically changes.

For example, the first frame rate is adjusted from 120 Hz to 90 Hz, adjusted to 60 Hz, and then adjusted to 45 Hz. This is one period, and the first frame rate periodically changes according to the foregoing rule.

Alternatively, for example, the first frame rate is adjusted from 45 Hz to 60 Hz, adjusted to 90 Hz, and then adjusted to 120 Hz. This is one period, and the first frame rate periodically changes according to the foregoing rule.

Alternatively, for example, the first frame rate is adjusted from 45 Hz to 90 Hz, adjusted to 60 Hz, and then adjusted to 120 Hz. This is one period, and the first frame rate periodically changes according to the foregoing rule.

Alternatively, for example, the first frame rate is adjusted from 120 Hz to 90 Hz, adjusted to 60 Hz, adjusted to 45 Hz, adjusted to 60 Hz, adjusted to 90 Hz, and then adjusted to 120 Hz. This is one period, and the first frame rate periodically changes according to the foregoing rule.

Certainly, the foregoing is merely an example, and no limitation is imposed. In addition, an optional value of the first frame rate is not limited to the foregoing enumerated values 120 Hz, 90 Hz, 60 Hz, and 45 Hz, and may be any value.

In some other embodiments, the first frame rate does not periodically change.

For example, a plurality of optional values of the first frame rate are specified. According to an application scenario, the first frame rate is randomly selected from the plurality of optional values, and there is no rule.

FIG. 4 is a diagram of steps of the touch scanning method according to an embodiment of this application. On a basis that the first frame rate is a dynamically adjustable frame rate, as shown in FIG. 4, the touch scanning method provided in this embodiment of this application includes the following steps.

S10: Output the touch scanning signal to the display 132 based on a second frame rate.

The second frame rate is an integer multiple of the first frame rate. For example, the first frame rate is a frame frequency of the display 132, the second frame rate is a carrier frequency of the TPIC 133, and the second frame rate=the first frame rate*a quantity of lines of the display 132*K, where K is an integer greater than 0.

In this case, after the display 132 is determined, the quantity of lines of the display 132 does not change any more, and the carrier frequency may be adjusted not only by adjusting a value of K, but also by adjusting the first frame rate.

In some embodiments, step S10 includes:
receiving a line synchronization signal H-sync corresponding to the first frame rate, and outputting the touch scanning signal to the display by using a frame synchronization signal as a reference and based on the second frame rate.

In other words, the second frame rate is not only the integer multiple of the first frame rate, but also frame-line-synchronized with the first frame rate.

In some other embodiments, step S10 includes:
receiving a frame synchronization signal V-sync corresponding to the first frame rate, and outputting the touch scanning signal to the display 132 by using the frame synchronization signal as a reference and based on the second frame rate.

In other words, the second frame rate is not only the integer multiple of the first frame rate, but also frame-synchronized with the first frame rate.

FIG. 5 is a relative timing diagram of the touch scanning signal and the frame synchronization signal according to an embodiment of this application. In some embodiments, as shown in FIG. 5, in a process of outputting a plurality of consecutive frames of touch scanning signals to the display 132, in at least one of the plurality of frames, a moment at which the touch scanning signal is output is delayed by specified time compared with a moment at which the frame synchronization signal V-sync is received.

A length of the specified time that is delayed is not limited in this embodiment of this application, and may be appropriately set depending on specific application.

In this embodiment of this application, sending time of the touch scanning signal is decoupled from a display effective range. After the frame synchronization signal V-sync is received, adjustment may be performed inside the TPIC 133, so that the output touch scanning signal has a specific delay (delay), to reduce an overlapping degree of the touch scanning signal output by the TPIC 133 to a display drive signal output by the DDIC 131, thereby reducing interference of the touch scanning signal output by the TPIC 133 to the display drive signal output by the DDIC 131, and mitigating a display ghosting problem.

For selection of a frame with a delay, in some embodiments, in each frame, a moment at which the touch scanning signal is output is delayed by specified time compared with a moment at which the frame synchronization signal V-sync is received. In this case, the specified time is a fixed value.

In some other embodiments, the touch scanning signal is periodically output, each period includes a plurality of consecutive frames, and specified time corresponding to the plurality of frames is not completely the same or completely different.

For example, each period includes two frames. To be specific, an odd frame and an even frame are distinguished, and one period includes one odd frame and one even frame.

For example, as shown in FIG. 5, in two adjacent frames, a moment at which the touch scanning signal is output is synchronized with a moment at which the frame synchronization signal V-sync is received in one frame (one frame period). Alternatively, it is understood that specified time that is delayed by the moment at which the touch scanning signal is output compared with the moment at which the frame synchronization signal V-sync is received in the frame is 0; and specified time that is delayed by the moment at which the touch scanning signal is output compared with the moment at which the frame synchronization signal V-sync is received in the other frame is not 0.

Alternatively, for example, first specified time that is delayed by the moment at which the touch scanning signal is output compared with the moment at which the frame synchronization signal V-sync is received in the odd frame is different from second specified time that is delayed by the moment at which the touch scanning signal is output compared with the moment at which the frame synchronization signal V-sync is received in the even frame. The first specified time is greater than the second specified time, or the first specified time is less than the second specified time.

In this way, it is known that the ghosting problem occurs in time domain, and the touch scanning signal output by the TPIC 133 generates severe ghosting a in an overlapping area for the display drive signal output by the DDIC 131. The ghosting a of the displayed image is attenuated in time domain by adjusting synchronization (synchronization, Sync) time in time domain, for example, attenuated from a to a/2, so that the display ghosting problem is mitigated.

Alternatively, for example, each period includes a plurality of (more than two) frames.

For example, each period includes three frames, and in one frame, the moment at which the touch scanning signal is output is delayed by first specified time compared with the moment at which the frame synchronization signal V-sync is received; in one frame, the moment at which the touch scanning signal is output is delayed by second specified time compared with the moment at which the frame synchronization signal V-sync is received; and in one frame, the moment at which the touch scanning signal is output is delayed by third specified time compared with the moment at which the frame synchronization signal V-sync is received.

The first specified time, the second specified time, and the third specified time are not completely the same, or are completely different. Certainly, values of the first specified time, the second specified time, and the third specified time are not limited in this embodiment of this application. The first specified time, the second specified time, and the third specified time may be any value greater than or equal to 0.

Because a specific frame in which a most serious ghosting problem occurs is not determined, time-domain smoothing effect is generated by accumulating a plurality of frames in a period, to achieve time-domain ghosting attenuation effect.

In some embodiments, the touch scanning method further includes: receiving a delayed reset signal between adjacent periodicities.

Alternatively, it is understood that, after one period ends, the delayed reset signal is received, and accumulated delay time in the period is reset, so that display effect is avoided from being affected by continuous accumulation of the delay time.

S20: Receive touch data fed back by the display 132.

After a touch layer of the display 132 receives the touch scanning signal, the touch data detected by a touch unit is output through a receive electrode, and the TPIC 133 receives the touch data fed back by the touch layer of the display 132.

S30: Output a touch scanning result based on the touch data.

For example, the touch data is processed to obtain touch coordinates, a touch operation is identified based on the touch coordinates, and a processing result is output to a processor 11.

According to the touch scanning method provided in this embodiment of this application, in an entire touch scanning process, the second frame rate matches the first frame rate displayed on the display. The second frame rate is adjusted, so that the second frame rate is an integer multiple of the first frame rate, and the second frame rate and the first frame rate have a synchronization (sync) relationship, thereby reducing impact of the touch scanning signal on the display drive signal. On this basis, based on the dynamically adjustable first frame rate, the second frame rate of the touch scanning signal is also dynamically adjustable, to meet requirements of different frequencies.

In some embodiments, the touch scanning method provided in this embodiment of this application is used in a TPIC in an organic light-emitting diode display.

In view of this, an embodiment of this application further provides a TPIC 133. The TPIC 133 may be, for example, used in the display 132 shown in FIG. 1A, and is configured to provide a touch scanning signal and a sampling scanning signal for the display 132.

The display is configured to receive a display drive signal based on a first frame rate, and the display drive signal is, for example, output by a DDIC 131 of the display 132 to the display 132 based on the first frame rate.

The TPIC 133 is configured to output the touch scanning signal to the display based on a second frame rate. For a process in which the TPIC 133 outputs the touch scanning signal, refer to the related descriptions in step S10 above.

For example, the TPIC 133 receives a frame synchronization signal corresponding to the first frame rate, and outputs the touch scanning signal to the display 132 by using the frame synchronization signal as a reference and based on the second frame rate.

In some embodiments, in at least one of a plurality of frames of output touch scanning signals, a moment at which the touch scanning signal is output is delayed by specified time compared with a moment at which the frame synchronization signal is received.

For example, the touch scanning signal is periodically output, each period includes a plurality of consecutive frames, and specified time corresponding to the plurality of frames is not completely the same or completely different.

For example, each period includes two or more frames.

In this case, the TPIC 133 is further configured to receive a delayed reset signal between adjacent periodicities.

The TPIC 133 is further configured to receive touch data fed back by the display 132. For a process in which the touch data is received by the TPIC 133, refer to the related descriptions in step S20 above.

The TPIC 133 is further configured to output a touch scanning result based on the touch data. For a process in which the TPIC 133 identifies a touch operation, refer to the related descriptions in step S30 above.

The first frame rate is an adjustable frame rate, and the second frame rate is an integer multiple of the first frame rate.

The TPIC 133 provided in this embodiment of this application may be used in, for example, an organic light-emitting diode display, and certainly may also be used in any other display having a touch display function.

In some embodiments, an embodiment of this application further provides a display module 13. The display module 13 may be, for example, the display module 13 shown in FIG. 1A and FIG. 1B.

The display module 13 includes a DDIC 131, a display 132, and a TPIC 133. The DDIC 131 is coupled to the TPIC 133, and the DDIC 131 is also coupled to the display 132. In the display module 13, the TPIC 133 is configured to implement the foregoing touch scanning method.

In some embodiments, the display 132 is configured to receive a display drive signal based on a first frame rate, and the display drive signal may be, for example, provided by the DDIC 131. For example, the DDIC 131 is configured to output the display drive signal to the display 132 based on the first frame rate.

For example, if the first frame rate is a variable frame rate, both a frame (vertical) frequency and a line (horizontal) frequency of the display drive signal output by the DDIC 131 are dynamically adjusted.

In some embodiments, the DDIC 131 is further configured to output a synchronization signal (sync) to the TPIC 133 based on the first frame rate of the display 132.

For example, the DDIC 131 is further configured to output a frame synchronization signal (V-sync) to the TPIC 133 based on the first frame rate of the display 132.

Alternatively, for example, the DDIC 131 is further configured to output a line synchronization signal (H-sync) to the TPIC 133 based on the first frame rate of the display 132.

It may be understood that, if the first frame rate is dynamically variable, the frame rate and the line frequency of the DDIC 131 are also dynamically variable, and the frame synchronization signal (V-sync) and the line synchronization signal (H-sync) that are output by the DDIC 131 to the TPIC are also dynamically variable; and both the frame rate and the line frequency of the DDIC 131 and the frame synchronization signal (V-sync) and the line synchronization signal (H-sync) that are output by the DDIC 131 to the TPIC are adaptively and dynamically adjusted.

The display module 13 provided in this embodiment of this application may be used in an electronic device 1 provided in this embodiment of this application. The electronic device 1 may be, for example, the electronic device 1 shown in FIG. 1A.

### Example 2

A main difference from Example 1 is that in Example 2, the first frame rate may be an adjustable frame rate, or the first frame rate may be a fixed frame rate.

The touch scanning method provided in this embodiment of this application may be, for example, applied to the TPIC 133 of the display 132 shown in FIG. 1B. The TPIC 133 is coupled to the display 132, and is configured to output a touch scanning signal and a sampling scanning signal to the display 132.

The display 132 is configured to receive a display drive signal based on a first frame rate, and the display drive signal is, for example, output by the DDIC 131 of the display 132 to the display 132 based on the first frame rate.

The first frame rate is a display frame rate, or is understood as a frame frequency of the display 132. The first frame rate may be an adjustable frame rate, or the first frame rate may be a fixed frame rate.

The touch scanning method provided in this embodiment of this application includes the following steps.

S10: Output the touch scanning signal to the display 132 based on a second frame rate.

The second frame rate is an integer multiple of the first frame rate. For example, the first frame rate is a frame frequency of the display 132, the second frame rate is a carrier frequency of the TPIC 133, and the second frame rate=the first frame rate*a quantity of lines of the display 132*K, where K is an integer greater than 0.

In this case, after the display 132 is determined, the quantity of lines of the display 132 does not change any more, and the carrier frequency may be adjusted not only by adjusting a value of K, but also by adjusting the first frame rate.

As shown in FIG. 5, in a process of outputting a plurality of consecutive frames of touch scanning signals to the display 132, in at least one of the plurality of frames, a moment at which the touch scanning signal is output is delayed by specified time compared with a moment at which the frame synchronization signal V-sync is received.

A length of the specified time that is delayed is not limited in this embodiment of this application, and may be appropriately set depending on specific application.

For selection of a frame with a delay, in some embodiments, in each frame, a moment at which the touch scanning signal is output is delayed by specified time compared with a moment at which the frame synchronization signal V-sync is received. In this case, the specified time is a fixed value.

In some other embodiments, the touch scanning signal is periodically output, each period includes a plurality of consecutive frames, and specified time corresponding to the plurality of frames is not completely the same or completely different.

For example, each period includes two frames. To be specific, an odd frame and an even frame are distinguished, and one period includes one odd frame and one even frame.

For example, as shown in FIG. 5, in two adjacent frames, a moment at which the touch scanning signal is output is synchronized with a moment at which the frame synchronization signal V-sync is received in one frame (one frame period). Alternatively, it is understood that specified time that is delayed by the moment at which the touch scanning signal is output compared with the moment at which the frame synchronization signal V-sync is received in the frame is 0; and specified time that is delayed by the moment at which the touch scanning signal is output compared with the moment at which the frame synchronization signal V-sync is received in the other frame is not 0.

Alternatively, for example, first specified time that is delayed by the moment at which the touch scanning signal is output compared with the moment at which the frame synchronization signal V-sync is received in the odd frame is different from second specified time that is delayed by the moment at which the touch scanning signal is output compared with the moment at which the frame synchronization signal V-sync is received in the even frame. The first specified time is greater than the second specified time, or the first specified time is less than the second specified time.

In this way, it is known that the ghosting problem occurs in time domain, and the touch scanning signal output by the TPIC 133 generates severe ghosting a in an overlapping area for the display drive signal output by the DDIC 131. The ghosting a of the displayed image is attenuated in time domain by adjusting synchronization (synchronization, Sync) time in time domain, for example, attenuated from a to a/2, so that the display ghosting problem is mitigated.

Alternatively, for example, each period includes a plurality of (more than two) frames.

For example, each period includes three frames, and in one frame, the moment at which the touch scanning signal is output is delayed by first specified time compared with the moment at which the frame synchronization signal V-sync is received; in one frame, the moment at which the touch scanning signal is output is delayed by second specified time compared with the moment at which the frame synchronization signal V-sync is received; and in one frame, the moment at which the touch scanning signal is output is delayed by third specified time compared with the moment at which the frame synchronization signal V-sync is received.

The first specified time, the second specified time, and the third specified time are not completely the same, or are completely different. Certainly, values of the first specified time, the second specified time, and the third specified time are not limited in this embodiment of this application. The first specified time, the second specified time, and the third specified time may be any value greater than or equal to 0.

Because a specific frame in which a most serious ghosting problem occurs is not determined, time-domain smoothing effect is generated by accumulating a plurality of frames in a period, to achieve time-domain ghosting attenuation effect.

In some embodiments, the touch scanning method further includes: receiving a delayed reset signal between adjacent periodicities.

Alternatively, it is understood that, after one period ends, the delayed reset signal is received, and accumulated delay time in the period is reset, so that display effect is avoided from being affected by continuous accumulation of the delay time.

In some embodiments, step S10 includes:
receiving a line synchronization signal H-sync corresponding to the first frame rate, and outputting the touch scanning signal to the display by using a frame synchronization signal as a reference and based on the second frame rate.

In other words, the second frame rate is not only the integer multiple of the first frame rate, but also frame-line-synchronized with the first frame rate.

In some other embodiments, step S10 includes:
receiving a frame synchronization signal V-sync corresponding to the first frame rate, and outputting the touch scanning signal to the display 132 by using the frame synchronization signal as a reference and based on the second frame rate.

In other words, the second frame rate is not only the integer multiple of the first frame rate, but also frame-synchronized with the first frame rate.

S20: Receive touch data fed back by the display 132.

After a touch layer of the display 132 receives the touch scanning signal, the touch data detected by a touch unit is output through a receive electrode, and the TPIC 133 receives the touch data fed back by the touch layer of the display 132.

S30: Output a touch scanning result based on the touch data.

For example, the touch data is processed to obtain touch coordinates, a touch operation is identified based on the touch coordinates, and a processing result is output to a processor 11.

In this embodiment of this application, sending time of the touch scanning signal is decoupled from a display effective range. After the frame synchronization signal V-sync is received, adjustment may be performed inside the TPIC 133, so that the output touch scanning signal has a specific delay (delay), to reduce an overlapping degree of the touch scanning signal output by the TPIC 133 to a display drive signal output by the DDIC 131, thereby reducing interference of the touch scanning signal output by the TPIC 133 to the display drive signal output by the DDIC 131, and mitigating a display ghosting problem.

In some embodiments, the touch scanning method provided in this embodiment of this application is used in a TPIC in an organic light-emitting diode display.

In view of this, an embodiment of this application further provides a TPIC 133. The TPIC 133 may be, for example, used in the display 132 shown in FIG. 1A, and is configured to provide a touch scanning signal and a sampling scanning signal for the display 132.

The display is configured to receive a display drive signal based on a first frame rate, and the display drive signal is, for example, output by a DDIC 131 of the display 132 to the display 132 based on the first frame rate.

The TPIC 133 is configured to output the touch scanning signal to the display based on a second frame rate. For a process in which the TPIC 133 outputs the touch scanning signal, refer to the related descriptions in step S10 above.

In a process of outputting a plurality of consecutive frames of touch scanning signals to the display 132, in at least one of the plurality of frames, a moment at which the touch scanning signal is output is delayed by specified time compared with a moment at which the frame synchronization signal V-sync is received.

For example, the TPIC 133 receives a frame synchronization signal corresponding to the first frame rate, and outputs the touch scanning signal to the display 132 by using the frame synchronization signal as a reference and based on the second frame rate.

The TPIC 133 is further configured to receive touch data fed back by the display 132. For a process in which the touch data is received by the TPIC 133, refer to the related descriptions in step S20 above.

The TPIC 133 is further configured to output a touch scanning result based on the touch data. For a process in which the TPIC 133 identifies a touch operation, refer to the related descriptions in step S30 above.

The TPIC 133 provided in this embodiment of this application may be used in, for example, an organic light-emitting diode display, and certainly may also be used in any other display having a touch display function.

In some embodiments, an embodiment of this application further provides a display module 13. The display module 13 may be, for example, the display module 13 shown in FIG. 1A and FIG. 1B.

The display module 13 includes a DDIC 131, a display 132, and a TPIC 133. The DDIC 131 is coupled to the TPIC 133, and the DDIC 131 is also coupled to the display 132. In the display module 13, the TPIC 133 is configured to implement the foregoing touch scanning method.

In some embodiments, the display 132 is configured to receive a display drive signal based on a first frame rate, and the display drive signal may be, for example, provided by the DDIC 131. For example, the DDIC 131 is configured to output the display drive signal to the display 132 based on the first frame rate.

For example, if the first frame rate is a variable frame rate, both a frame (vertical) frequency and a line (horizontal) frequency of the display drive signal output by the DDIC 131 are dynamically adjusted.

In some embodiments, the DDIC 131 is further configured to output a synchronization signal (sync) to the TPIC 133 based on the first frame rate of the display 132.

For example, the DDIC 131 is further configured to output a frame synchronization signal (V-sync) to the TPIC 133 based on the first frame rate of the display 132.

Alternatively, for example, the DDIC 131 is further configured to output a line synchronization signal (H-sync) to the TPIC 133 based on the first frame rate of the display 132.

It may be understood that, if the first frame rate is dynamically variable, the frame rate and the line frequency of the DDIC 131 are also dynamically variable, and the frame synchronization signal (V-sync) and the line synchronization signal (H-sync) that are output by the DDIC 131 to the TPIC are also dynamically variable; and both the frame rate and the line frequency of the DDIC 131 and the frame synchronization signal (V-sync) and the line synchronization signal (H-sync) that are output by the DDIC 131 to the TPIC are adaptively and dynamically adjusted.

The display module 13 provided in this embodiment of this application may be used in an electronic device 1 provided in this embodiment of this application. The electronic device 1 may be, for example, the electronic device 1 shown in FIG. 1A.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium. The communication medium includes any medium that enables a computer program to be transmitted from one place to another. The storage medium may be any available medium accessible to a general-purpose or a dedicated computer.

In view of this, an embodiment of this application further provides a computer-readable storage medium. The computer-readable storage medium includes computer instructions. When the computer instructions are run on a device, the device is enabled to perform the touch scanning method in Example 1, or perform the touch scanning method in Example 2.

An embodiment of this application further provides a computer program product. When the computer program product is run on a computer, the computer is enabled to perform the touch scanning method in Example 1, or perform the touch scanning method in Example 2.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A touch scanning method, wherein the touch scanning method is applied to a touch chip TPIC of a display, and the display is configured to receive a display drive signal based on a first frame rate; and
the touch scanning method comprises:
outputting a touch scanning signal to the display based on a second frame rate;
receiving touch data fed back by the display; and
outputting a touch scanning result based on the touch data, wherein
the first frame rate is an adjustable frame rate, and the second frame rate is an integer multiple of the first frame rate.

2. The touch scanning method according to claim 1, wherein outputting the touch scanning signal to the display based on the second frame rate comprises:
receiving a frame synchronization signal corresponding to the first frame rate, and outputting the touch scanning signal to the display by using the frame synchronization signal as a reference and based on the second frame rate.

3. The touch scanning method according to claim 2, wherein the first frame rate periodically changes.

4. The touch scanning method according to claim 2 or 3, wherein in at least one frame, a moment at which the touch scanning signal is output is delayed by specified time compared with a moment at which the frame synchronization signal is received.

5. The touch scanning method according to claim 4, wherein the touch scanning signal is periodically output, each period comprises a plurality of consecutive frames, and specified time corresponding to the plurality of frames is not completely the same or completely different.

6. The touch scanning method according to claim 5, wherein the touch scanning method further comprises: receiving a delayed reset signal between adjacent periodicities.

7. The touch scanning method according to claim 5 or 6, wherein each period comprises two frames.

8. The touch scanning method according to any one of claims 1 to 7, wherein the touch scanning method is applied to a TPIC in an organic light-emitting diode display.

9. A touch chip TPIC, wherein the TPIC is used in a display, and the display is configured to receive a display drive signal based on a first frame rate; and
the TPIC is configured to:
output a touch scanning signal to the display based on a second frame rate;
receive touch data fed back by the display; and
output a touch scanning result based on the touch data, wherein
the first frame rate is an adjustable frame rate, and the second frame rate is an integer multiple of the first frame rate.

10. The TPIC according to claim 9, wherein outputting the touch scanning signal to the display based on the second frame rate comprises:
receiving a frame synchronization signal corresponding to the first frame rate, and outputting the touch scanning signal to the display by using the frame synchronization signal as a reference and based on the second frame rate.

11. The TPIC according to claim 9 or 10, wherein in at least one frame, a moment at which the touch scanning signal is output is delayed by specified time compared with a moment at which the frame synchronization signal is received.

12. The TPIC according to claim 11, wherein the touch scanning signal is periodically output, each period comprises a plurality of consecutive frames, and specified time corresponding to the plurality of frames is not completely the same or completely different.

13. The TPIC according to claim 12, wherein the TPIC is further configured to: receive a delayed reset signal between adjacent periodicities.

14. The TPIC according to claim 11 or 12, wherein each period comprises two frames.

15. The TPIC according to any one of claims 9 to 14, wherein the TPIC is used in an organic light-emitting diode display.

16. A touch scanning method, wherein the touch scanning method is applied to a touch chip TPIC of a display, and the display is configured to receive a display drive signal based on a first frame rate; and
the touch scanning method comprises:
outputting a touch scanning signal to the display based on a second frame rate, wherein the second frame rate is an integer multiple of the first frame rate;
receiving touch data fed back by the display; and
outputting a touch scanning result based on the touch data, wherein
in at least one frame, a moment at which the touch scanning signal is output is delayed by specified time compared with a moment at which the display receives the display drive signal.

17. The touch scanning method according to claim 16, wherein outputting the touch scanning signal to the display based on the second frame rate comprises:
receiving a frame synchronization signal corresponding to the first frame rate, and outputting the touch scanning signal to the display by using the frame synchronization signal as a reference and based on the second frame rate.

18. The touch scanning method according to claim 16 or 17, wherein the touch scanning signal is periodically output, each period comprises a plurality of consecutive frames, and specified time corresponding to the plurality of frames is not completely the same or completely different.

19. The touch scanning method according to claim 18, wherein the touch scanning method further comprises: receiving a delayed reset signal between adjacent periodicities.

20. A touch chip TPIC, wherein the TPIC is used in a display, and the display is configured to receive a display drive signal based on a first frame rate; and
the TPIC is configured to:
output a touch scanning signal to the display based on a second frame rate, wherein the second frame rate is an integer multiple of the first frame rate;
receive touch data fed back by the display; and
output a touch scanning result based on the touch data, wherein
in at least one frame, a moment at which the touch scanning signal is output is delayed by specified time compared with a moment at which the display receives the display drive signal.

21. The TPIC according to claim 20, wherein outputting the touch scanning signal to the display based on the second frame rate comprises:
receiving a frame synchronization signal corresponding to the first frame rate, and outputting the touch scanning signal to the display by using the frame synchronization signal as a reference and based on the second frame rate.

22. The TPIC according to claim 20 or 21, wherein the touch scanning signal is periodically output, each period comprises a plurality of consecutive frames, and specified time corresponding to the plurality of frames is not completely the same or completely different.

23. The TPIC according to claim 22, wherein the TPIC is further configured to: receive a delayed reset signal between adjacent periodicities.

24. A display module, wherein the display module comprises a display, a touch chip TPIC, and a display driver chip DDIC, the TPIC is coupled to the DDIC, and the TPIC is configured to implement the touch scanning method according to any one of claims 1 to 8, or the TPIC is configured to implement the touch scanning method according to any one of claims 16 to 19.

25. The display module according to claim 24, wherein the DDIC is configured to output a frame synchronization signal to the TPIC based on a first frame rate of the display.

26. The display module according to claim 24 or 25, wherein the DDIC is configured to output a display drive signal to the display based on the first frame rate.

27. An electronic device, comprising a processor and a display module, wherein the processor is coupled to the display module, and the display module comprises the display module according to any one of claims 24 to 26.

28. A computer-readable storage medium, wherein the computer-readable storage medium comprises computer instructions; and when the computer instructions are run on a device, the device performs the touch scanning method according to any one of claims 1 to 8, or performs the touch scanning method according to any one of claims 16 to 19.
